# EUROPEAN PATENT APPLICATION

(11) **EP 4 851 210 A1**
(43) Date of publication of application: **09.12.2026**
(21) Application number: 26181609.4
(22) Date of filing: 28.05.2026
(51) Int. Cl.: C08G 59/42, C08G 59/24, C08G 59/68

(54) **A METHOD FOR PRODUCING AN EPOXY VITRIMER USING AN IMIDAZOLIUM IONIC LIQUID**

(30) Priority: 03.06.2025 PL 45225125; 03.06.2025 PL 45225325
(71) Applicant: Siec Badawcza Lukasiewicz - Instytut Ciezkiej Syntezy Organicznej "Blachownia", 47-225 Kedzierzyn-Kozle (PL); Politechnika Slaska, 44-100 Gliwice (PL)
(72) Inventor: Furgol, Simona, 44-100 Gliwice (PL); Kielkiewicz, Damian, 47-225 Kedzierzyn-Kozle (PL); Greif, Malgorzata, 47-220 Kedzierzyn-Kozle (PL); Nowicki, Janusz, 47-220 Kedzierzyn-Kozle (PL); Gaida, Rafal, 47-344 Grocholub (PL); Biernat, Natalia, 46-050 Walidrogi (PL); Iwanski, Lech, 47-220 Kedzierzyn-Kozle (PL); Dolata, Anna Janina, 43-190 Mikolow (PL)
(74) Representative: Kondrat, Mariusz

(57) **Abstract**

Invention relates to a method for producing an epoxy vitrimer using an alkylimidazolium ionic liquid comprises first adding a hardener in the form of an acid anhydride to the liquid epoxy resin such that the molar ratio of the acyl groups of the acid anhydride to the epoxy groups of the epoxy resin is 1:1, whereupon the mixture is heated to 120 °C and stirring is continued for 10 to 30 minutes until the acid anhydride is completely dissolved. The resulting mixture is then cooled to 90 °C, and an ionic liquid is added in an amount of 0.1 wt.% to 10 wt.% relative to the mass of the mixture of epoxy resin and acid anhydride and stirring is continued for no longer than 3 minutes. Finally, the resulting composition is poured into a mould and placed in a drying oven for a period of 30 minutes to 9 hours at 150 °C to cure it. The alkylimidazolium ionic liquid comprises a hydrosulphate (VI) anion, and the alkylimidazolium cation comprises at least one methyl group and one alkyl group with a chain length of C2-C4.

A further subject of the invention is a method for producing an epoxy vitrimer using an alkylimidazolium ionic liquid, which comprises first adding a hardener in the form of an acid anhydride to a liquid epoxy resin such that the molar ratio of the acyl groups of the acid anhydride to the epoxy groups of the epoxy resin is 1:1, whereupon the mixture is heated to a temperature of 120 °C, and stirring is then continued for 10 to 30 minutes until the acid anhydride is completely dissolved. The resulting mixture is then cooled to 90 °C, and an ionic liquid is added in an amount of 0.1 wt.% to 10 wt.% relative to the mass of the mixture of epoxy resin and acid anhydride, and mixing is continued for no longer than 3 minutes. Finally, the resulting composition is poured into a mould and placed in a drying oven for a period of 30 minutes to 9 hours at 150 °C to cure it. The ionic liquid contains a hydrogen sulphate (VI) anion, and the alkylimidazolium cation contains at least one methyl group and an alkyl group with a chain length of C6-C10.

## Description

The subject of the invention is a method for producing an epoxy vitrimer using an imidazolium ionic liquid, for use in the field of recyclable composite materials based on epoxy resins.

Epoxy resins (EP), classified as thermosetting polymers, have gained considerable popularity in various applications, including adhesives, coatings, laminates and composites, due to their exceptional properties. Once cured, these resins exhibit excellent chemical resistance and very good physical properties such as hardness, flexibility and abrasion resistance. They are resistant to high temperatures and weathering. A significant drawback of materials manufactured using epoxy resins is the problem of recycling, as an irreversible cross-linking process occurs during curing. They cannot be dissolved or melted down. Used epoxy resin composite materials end up in landfill sites, or are shredded and used as fillers, or are incinerated. This is a serious environmental problem. In order to reduce the amount of waste ending up in landfill and the consumption of petrochemical-based raw materials, it is desirable to identify alternative materials that possess all the advantages of cured epoxy resins and are suitable for recycling.

Epoxy vitrimers may offer a solution to this problem. Their structure contains *Covalent Adaptable Networks - CANs*, which enable the processing and recycling of such materials. Vitrimers are therefore an alternative form of polymeric material that combines the good mechanical properties and thermal stability of thermosetting resins with the reprocessability characteristic of thermoplastic resins. Vitrimers are recycled by dissolving them or subjecting them to mechanical processing at elevated temperatures.

In the case of vitrimers obtained through transesterification reactions, it is appropriate to use a catalyst to accelerate the thermally activated bond exchange reaction. The most common types of catalysts are Lewis and Brønsted acids, organic zinc salts - e.g. Zn(OAc)_{2,} triphenylphosphine and tertiary amines. However, the catalysts used are usually toxic or have poor miscibility with organic compounds, and furthermore generally cause a deterioration in the physical and chemical stability of the vitrimers, including its corrosion resistance, and are responsible for the hydrolysis of vitrimers. The need to leach out the catalyst can also be a significant problem.

Ionic liquids (*ILs*) offer a valuable alternative to these conventional transesterification catalysts and have enormous potential to play a key role in the synthesis of epoxy vitrimers. Ionic liquids are characterised by low vapour pressure, which minimises the emission of volatile organic compounds (VOCs) into the environment. Furthermore, they exhibit high thermal and chemical stability, making them suitable for use in processes requiring higher temperatures. Ionic liquids based on a combination of 1-butyl-3-methylimidazolium (bmim) or 1-ethyl-3-methylimidazolium (emim) cations with chloride, methyl sulphate and acetate anions; this is not only due to their exceptional catalytic activity, but also because of their availability on a semi-industrial scale, with a relatively simple synthesis procedure using readily available imidazole derivatives.

However, other types of ionic liquids are being tested for use in the production of vitrimers as catalysts. Thus, the paper by Panagiotis G. F. et al. Eur. Polym. J. 2021, 147 (https://doi.org/10.1016/j.eurpolymj.2021.110296) shows the use of 1,3-dibutylimidazolium acetate ([DiBuIm][AcO]) and 1,3-di-(3-hydroxypropyl)imidazolium acetate ([DiPrOHIm][AcO]) as transesterification catalysts in an epoxy resin composition containing adipic acid. The composition, comprising between 3.0 wt.% and 5.0 wt.% w/w of ionic liquid, was cured for 24 h at 140 °C. The resulting vitrimers, depending on the ionic liquid used and its proportion in the composition, were characterised by a decomposition temperature (T_{d5%}) ranging from 343 °C to 356 °C, a glass transition temperature (T_{g}) ranging from 37 °C to 47 °C, and a Young's modulus within the range of 650-1010 MPa. In the final stage of the research, the vitrimers were recycled by grinding them into small pieces and reforming them by pressing at a temperature of 200 °C. This process was repeated four times, and the material retained its mechanical properties after each recycling cycle.

The authors of the paper by F. Wanghofer et al. in Macromol. Mater. Eng. 2024, 309 (https://doi.org/10.1002/mame.202400011) described the use of ionic liquids based on the 1,3-dibutylimidazolium cation (DiBuIm⁺) and various anions (Br⁻, N(CN)₂⁻ , PF₆⁻ , BF₄⁻ , pTS⁻ and Tf₂N⁻). The compositions were prepared from epoxy resin and polyfunctional thiol-based curing agents, such as: bis-mercaptoacetate of ethylene glycol (EGMA, bifunctional) and pentaerythritol *tetrakis*(3-mercaptopropionate) (PETMP, tetrafunctional), whilst ionic liquids were added in an amount of 10 mol% relative to the epoxy groups (corresponding to approx. 9-10% ionic liquid content in the composition). After 13 hours of curing at a temperature of 80 °C-120 °C, the resulting vitrimers were characterised by a decomposition temperature (T_{d5%}) ranging from 250 °C to 363 °C and a glass transition temperature (T_{g}) ranging from 12 °C to 24 °C. The resulting composites were used as recyclable adhesives.

The paper by Wanghofer F. et al., ACS, 2024, 6 (1) (10.1021/acsapm.3c02293) describes a method for the synthesis of ionic liquids involving the 1,*3-di*(but-3-en-1-yl)imidazolium cation with selected anions (Tf₂N⁻, BF₄⁻, PF₆⁻) and their application in the production of epoxy vitrimers. The resulting epoxy compositions, to which ionic liquids had been added, were cured with dodecyl succinic anhydride in the presence of triazabicyclododecene for 1 h at 80 °C, followed by 16 h at 120 °C. The resulting vitrimers were characterised by a decomposition temperature (T_{d2%}) ranging from 229 °C to 314 °C, a glass transition temperature (T_{g}) ranging from 1 °C to 59 °C, and tensile strength ranging from 0.021 MPa to 3.19 MPa, depending on the ionic liquid used. As part of the research, the vitrimers were recycled by heating them under pressure at 160 °C for 6 to 9 hours, depending on the material. This process enabled a significant portion of the original mechanical properties to be recovered, confirming the recyclability and reusability of these materials.

In known solutions, the use of ionic liquids enables the production of epoxy vitrimers; however, these are characterised by poorer strength properties and often also a lower glass transition temperature compared to conventional epoxy resins. The unsatisfactory properties of these vitrimers reduce their competitiveness compared with traditional epoxy materials, which in turn are not suitable for reuse.

The aim of the invention was therefore to provide a method for producing an epoxy vitrimer using an ionic liquid as a catalyst, which vitrimer would exhibit improved thermal and strength properties.

A method for producing an epoxy vitrimer using an alkylimidazolium ionic liquid, from an anhydride-cured epoxy resin, is characterised in that the alkylimidazolium ionic liquid comprises a hydrogen sulphate (VI) anion, and an alkylimidazolium cation comprises at least one methyl group and one alkyl group with a chain length of C2-C4, wherein, in turn:
- First, a hardener in the form of an acid anhydride is added to a liquid bisphenol A diglycidyl ether-type epoxy resin such that the molar ratio of the acyl groups of the acid anhydride to the epoxy groups of the epoxy resin is 1:1, whereupon the mixture is heated with continuous stirring to a temperature of 120 °C, and stirring is then continued for 10 to 30 minutes until the acid anhydride is completely dissolved and a homogeneous, transparent mixture is obtained.
- The resulting mixture is then cooled to 90 °C and whilst stirring continuously, an ionic liquid is added in an amount of 0.1 % to 10 % w/w relative to the mass of the mixture consisting of epoxy resin and acid anhydride, and the mixture is then stirred, without further heating, for no longer than 3 minutes.
- Next, the resulting composition is poured into a mould, preferably a Teflon mould, and cured in a drying oven for 30 minutes to 9 hours at a temperature of 150 °C.

Preferably, the liquid bisphenol A diglycidyl ether-type epoxy resin has an epoxy value of between 0.510 mol/100 g and 0.550 mol/100 g.

Preferably, succinic anhydride is used as the acid anhydride.

Preferably, the ionic liquid is selected from the group comprising: 1-ethyl-3-methylimidazolium hydrogen sulphate ([emim]HSO₄), 1-butyl-3-methylimidazolium hydrogen sulphate ([bmim]HSO₄), and 1-butyl-2,3-dimethylimidazolium hydrogen sulphate ([bmmim]HSO₄).

It is preferable to use [bmim]HSO₄ as the ionic liquid.

It is preferable to add the ionic liquid in an amount ranging from 1.0 wt.% to 2.5 wt.%, relative to the mass of the mixture consisting of epoxy resin and acid anhydride. This recommended concentration range allows a fully functional vitrimer to be obtained, regardless of the type of ionic liquid used. Increasing the ionic liquid content to 10 wt.% allows the mechanical and thermal properties of the resin to be modified whilst maintaining its functionality. Above this level, the reaction proceeds rapidly following the addition of the catalyst, which makes it difficult to handle the composition under industrial conditions.

A method for producing an epoxy vitrimer using an alkylimidazolium ionic liquid, from an anhydride-cured epoxy resin, characterised in that the alkylimidazolium ionic liquid contains a hydrogen sulphate (VI) anion, and the alkylimidazolium cation comprises at least one methyl group and an alkyl group with a chain length of C6-C10, whereby, said method comprises in sequence:
- First, a hardener in the form of an acid anhydride is added to a liquid bisphenol A diglycidyl ether-type epoxy resin, such that the molar ratio of the acyl groups of the acid anhydride to the epoxy groups of the epoxy resin is 1:1, whereupon the mixture is heated, with continuous stirring, to a temperature of 120 °C, and stirring is then continued for 10 to 30 minutes until the acid anhydride is completely dissolved and a homogeneous, transparent mixture is obtained.
- The resulting mixture is then cooled to 90 °C and, whilst stirring continuously, an ionic liquid is added in an amount of 0.1 wt.% to 10 wt.% relative to the mass of the mixture consisting of epoxy resin and acid anhydride, and the mixture is then stirred, without further heating, for no longer than 3 minutes.
- Next, the resulting composition is poured into a mould, preferably a Teflon mould, and placed in a drying oven for a period of 30 minutes to 9 hours at a temperature of 150 °C to cure it.

Preferably, the liquid bisphenol A diglycidyl ether-type epoxy resin has an epoxy value of between 0.510 mol/100 g and 0.550 mol/100 g.

Preferably, succinic anhydride is used as the acid anhydride.

Preferably, the ionic liquid is selected from the group comprising: 1-hexyl-3-methylimidazolium hydrogen sulphate ([C6mim]HSO₄), 1-octyl-3-methylimidazolium hydrogen sulphate ([C8mim]HSO₄), and 1-decyl-3-methylimidazolium hydrogen sulphate ([C10mim]HSO₄).

It is preferable to add the ionic liquid in an amount ranging from 1.0 wt.% to 2.5 wt.% relative to the mass of the mixture consisting of epoxy resin and acid anhydride. This recommended concentration range allows a fully functional vitrimer to be obtained, regardless of the type of ionic liquid used. Increasing the proportion of the ionic liquid to 10 wt.% allows the mechanical and thermal properties of the resin to be modified whilst maintaining its functionality. Above this level, the reaction proceeds rapidly following the addition of the catalyst, which makes it difficult to handle the composition under industrial conditions.

The method of producing an epoxy vitrimer according to the present invention makes it possible to obtain a cured material with excellent mechanical and thermal properties, which are comparable to, or even exceed, those of permanently cross-linked conventional epoxy materials, and which are additionally suitable for reuse. Advantageously, the vitrimers obtained remain stable at high temperatures, and their processing requires the additional use of a solvent. Furthermore, there is no need to heat the material for many hours.

The method according to the invention is illustrated by the following examples.

### Example 1

In the first stage of the process, 23.6 g of Epidian^{®}6 epoxy resin from Sarzyna Chemical company, with an epoxy value (EV) of 0.535 mol/100 g, and 6.25 g of succinic anhydride (hardener) were introduced into a 250 ml reactor, whereupon, with continuous stirring, the contents of the reactor were heated to 120 °C over a period of 10 minutes in order to completely melt the succinic anhydride. The reactor was then cooled to 90 °C and an ionic liquid [bmim]HSO₄ was added in an amount of 2.5 wt.% relative to the mass of the mixture of resin and succinic anhydride and stirring was continued for a further 2 minutes without heating. Following the procedure described, six identical samples of liquid vitrimer compositions were prepared; each was then poured into a Teflon mould and placed in a drying oven at 150 °C for a duration ranging from 0.5 h to 9 h (as shown in the table below) to cure. Six cured epoxy vitrimers were thus produced. For each, the glass transition temperature (T_{g}), degradation temperature (T_{d5%}), tensile strength (σ_{M}) and relative elongation at break (ε_{B}). The values obtained, depending on the curing time, are summarised in the table below:

| Curing time, h | T_{g}, °C | T_{d5%}, °C | σ_{M}, MPa | ε_{B}, % |
|---|---|---|---|---|
| 0.5 | 50.1 | 361.3 | 28.4 | 0.21 |
| 1 | 59.1 | 359.4 | 34.0 | 0.56 |
| 2 | 66.4 | 364.7 | 24.7 | 0.41 |
| 3 | 74.3 | 362.9 | 76.2 | 3.3 |
| 6 | 84.4 | 362.5 | 70.9 | 3.3 |
| 9 | 92.2 | 365.7 | 71.7 | 3.3 |

### Example 2

As described in Example 1, liquid compositions were first prepared and subsequently cured to obtain epoxy vitrimers, with the difference that the ionic liquid content was 1 wt.%.

The resulting vitrimers have the following parameters:

| Curing time, h | T_{g}, °C | σ_{M}, MPa | ε_{B}, % |
|---|---|---|---|
| 0.5 | 44.1 | 27.3 | 0.63 |
| 1 | 48.9 | 14.4 | 0.28 |
| 2 | 51.4 | 24.8 | 0.61 |
| 3 | 65.4 | 59.6 | 1.6 |
| 6 | 74.2 | 59.4 | 2.0 |
| 9 | 82.5 | 74.4 | 4.0 |

The material obtained after 9 hours of curing was recycled. For this purpose, 50.0 g of cured epoxy vitrimer was placed in a 250 ml flask. Subsequently, propylene glycol was added in an amount equal to three times the mass of the vitrimer, acting as a solvent. The solution was stirred at 180 °C for 15 minutes, after which the solvent was evaporated at 180 °C under vacuum. A liquid vitrimer recyclate was obtained.

To produce the new material, the recyclate was mixed with a fresh, liquid vitrimer composition (prepared as described in this example) in a 1:1 weight ratio. The mixture was thoroughly blended. The composition prepared in this way was poured into a Teflon mould and placed in a drying oven for 3 h at 150 °C. The resulting epoxy vitrimer, containing 50 wt.% of the recyclate, has the following properties:
- Glass transition temperature (T_{g}): 38.9 °C
- Tensile strength (σ_{M}): 58.4 MPa
- Relative elongation at break (ε_{B}): 1.7 %

### Example 3

As described in Example 1, liquid compositions were first prepared, followed by the curing of epoxy vitrimers, with the difference that the ionic liquid content was 5 wt.%. After its addition to the mixture of resin and anhydride, mixing was continued for a further 30 s. The vitrimers produced in this way are characterised by the following parameters:

| Curing time, h | T_{g}, °C | σ_{M}, MPa | ε_{B}, % |
|---|---|---|---|
| 0.5 | 53.2 | 25.9 | 0.84 |
| 1 | 62.0 | 24.0 | 0.52 |
| 2 | 74.1 | 56.1 | 3.0 |
| 3 | 80.6 | 71.0 | 4.2 |
| 6 | 87.9 | 74.3 | 4.8 |
| 9 | 96.1 | 57.9 | 2.5 |

### Example 4

As described in Example 1, liquid compositions were first prepared, followed by the curing of epoxy vitrimers, with the difference that the proportion of ionic liquid was 10 wt.%. After its addition to the mixture of resin and anhydride, mixing was continued for a further 10 s. The resulting vitrimers are characterised by the following parameters:

| Curing time, h | T_{g}, °C | σ_{M}, MPa | ε_{B}, % |
|---|---|---|---|
| 0.5 | 52.2 | 45.7 | 1.3 |
| 1 | 59.3 | 44.6 | 1.0 |
| 2 | 65.5 | 46.6 | 1.1 |
| 3 | 73.1 | 68.7 | 3.7 |
| 6 | 76.2 | 59.9 | 4.5 |
| 9 | 81.0 | 78.1 | 3.8 |

### Example 5

A liquid composition was prepared following the procedure described in Example 2,, but [bmmim]HSO₄ was used as the ionic liquid. The resulting composition was poured onto a Teflon mould and placed in a drying oven for 3 h at T = 150 °C.

The cured epoxy vitrimer produced in this way has the following properties:
- Tensile strength (σ_{M}): 32.1 MPa
- Relative elongation at break (ε_{B}): 0.5 %

The material obtained was dissolved as described in Example 2. A liquid recyclate was obtained.

### Example 6

Following the procedure described in Example 1, a liquid composition was prepared, but [emim]HSO₄ was used as the ionic liquid. The resulting composition was poured into a Teflon mould and placed in a drying oven for 6 h at T = 150 °C.

The cured epoxy vitrimer produced in this way has the following properties:
- Tensile strength (σ_{M}): 44.6 MPa
- Relative elongation at break (ε_{B}): 1.7 %

The resulting material was dissolved as described in Example 2. A liquid recyclate was obtained.

### Example 7

In the first stage of the process, 23.6 g of Epidian^{®}6 epoxy resin, manufactured by Sarzyna Chemical company with an epoxy value (EV) of 0.535 mol/100 g, and 6.25 g of succinic anhydride (hardener) were added to a 250 ml reactor, after which, whilst stirring continuously, the contents of the reactor were heated to 120 °C over a period of 10 minutes to ensure complete melting of the succinic anhydride. The reactor was then cooled to 90 °C and 2.5 wt.% of the ionic liquid [C6mim]HSO₄, relative to the mass of the mixture of resin and succinic anhydride was added and stirred continuously for a further 2 minutes without heating. The resulting liquid vitrimer composition was then poured onto a Teflon mould and placed in a drying oven at 150 °C for 3 h to cure.

The epoxy vitrimer produced in this way is characterised by the following parameters:
- Glass transition temperature (T_{g}): 51.4 °C
- Tensile strength (σ_{M}): 57.0 MPa
- Relative elongation at break (ε_{B}): 7.2 %

The resulting material was subjected to a recycling process. For this purpose, 50.0 g of cured epoxy vitrimer was placed into a 250 ml flask. Subsequently, propylene glycol was added in an amount equal to three times the mass of the vitrimer to act as a solvent. The solution was stirred at 180 °C for 15 minutes, after which the solvent was evaporated (at 180 °C under vacuum). A liquid vitrimer recyclate was obtained.

To produce the new material, the recycled material was mixed with a fresh vitrimer composition (prepared as described in this example) in a weight ratio of 0.25:1. The mixture was thoroughly blended. The composition prepared in this way was poured into a Teflon mould and placed in a drying oven for 3 hours at 150 °C.

The epoxy vitrimer obtained in this way, which contains 25 wt. % of recycled material, has the following properties:
- Tensile strength (σ_{M}): 37.7 MPa
- Relative elongation at break (ε_{B}): 0.92 %

### Example 8

As described in Example 7, a liquid composition was first prepared, followed by the curing of epoxy vitrimer, with the difference that the proportion of ionic liquid content was 1.0 wt.% and the curing time was 2 h. The resulting vitrimer has a glass transition temperature (T_{g}) of 49.9 °C.

The resulting material was dissolved as described in Example 1. A liquid recyclate was obtained.

### Example 9

As described in Example 7, a liquid composition was first prepared, followed by the curing of epoxy vitrimer, with the difference that the [C8mim]HSO₄ was used as the ionic liquid, with a content of 5 wt.%. The resulting vitrimer has the following properties:
- Tensile strength (σ_{M}): 31.5 MPa
- Relative elongation at break (ε_{B}): 0.64 %

The resulting material was dissolved as described in Example 1. A liquid recyclate was obtained.

### Example 10

As described in Example 7, a liquid composition was first prepared, followed by the curing of epoxy vitrimer, with the difference that the [C10mim]HSO₄ was used as the ionic liquid, and its content was 6 wt.%. The resulting vitrimer has the following properties:
- Tensile strength (σ_{M}): 43.06 MPa
- Relative elongation at break (ε_{B}): 1.11 %

The resulting material was dissolved as described in Example 7. A liquid recyclate was obtained.

## Claims

1. A method for producing an epoxy vitrimer using an alkylimidazolium ionic liquid, from an anhydride-cured epoxy resin, **characterised in that** the alkylimidazolium ionic liquid comprises a hydrogen sulphate (VI) anion, and an alkylimidazolium cation comprises at least one methyl group and one alkyl group with a chain length of C2-C4, wherein, said method comprises in sequence:
• a hardener in the form of an acid anhydride is added to a liquid bisphenol A diglycidyl ether-type epoxy resin such that the molar ratio of the acyl groups of the acid anhydride to the epoxy groups of the epoxy resin is 1:1, afterwards the mixture is heated, with continuous stirring, to a temperature of 120 °C, and stirring is then continued for 10 to 30 minutes until the acid anhydride is completely dissolved and a homogeneous, transparent mixture is obtained; thereafter
• the resulting mixture is cooled to 90 °C and, whilst stirring continuously, an ionic liquid is added in an amount of 0.1 wt.% to 10 wt.% relative to the mass of the mixture consisting of the epoxy resin and the acid anhydride, and the mixture is stirred without further heating for no longer than 3 minutes; and then
• the resulting composition is poured into a mould, preferably a Teflon mould, and cured in a drying oven for 30 minutes to 9 hours at a temperature of 150 °C.

2. The method according to claim 1, **characterised in that** the liquid bisphenol A diglycidyl ether-type epoxy resin has an epoxy value of between 0.510 mol/100 g and 0.550 mol/100 g.

3. The method according to claim 1, **characterised in that** succinic anhydride is used as the acid anhydride.

4. The method according to claim 1, **characterised in that** the ionic liquid is selected from the group comprising: 1-ethyl-3-methylimidazolium hydrogen sulphate ([emim]HSO₄), 1-butyl-3-methylimidazolium hydrogen sulphate ([bmim]HSO₄), and 1-butyl-2,3-dimethylimidazolium hydrogen sulphate ([bmmim]HSO₄).

5. The method according to claim 4, **characterised in that** [bmim]HSO₄ is used as the ionic liquid.

6. The method according to claim 1, **characterised in that** the ionic liquid is added in an amount of from 1.0 wt.% to 2.5 wt.% relative to the mass of the mixture comprising the epoxy resin and the acid anhydride.

7. A method for producing an epoxy vitrimer using an alkylimidazolium ionic liquid, from an anhydride-cured epoxy resin, **characterised in that** the alkylimidazolium ionic liquid comprises a hydrogen sulphate (VI) anion, and the alkylimidazolium cation comprises at least one methyl group and an alkyl group with a chain length of C6-C10, wherein, said method comprises in sequence:
• a hardener in the form of an acid anhydride is added to a liquid bisphenol A diglycidyl ether-type epoxy resin such that the molar ratio of the acyl groups of the acid anhydride to the epoxy groups of the epoxy resin is 1:1, after which the mixture is heated, with continuous stirring, to a temperature of 120 °C; stirring is then continued for 10 to 30 minutes until the acid anhydride is completely dissolved and a homogeneous, transparent mixture is obtained; thereafter
• the resulting mixture is cooled to 90 °C and, whilst stirring continuously, an ionic liquid is added in an amount of 0.1 wt.% to 10 wt.%, relative to the mass of the mixture consisting of the epoxy resin and the acid anhydride, and stirred without further heating for no longer than 3 minutes; and then
• the resulting composition is poured into a mould, preferably a Teflon mould, and placed in a drying oven for a period of 30 minutes to 9 hours at a temperature of 150 °C to cure it.

8. The method according to claim 7, **characterised in that** the liquid bisphenol A diglycidyl ether-type epoxy resin has an epoxy value of between 0.510 mol/100 g and 0.550 mol/100 g.

9. The method according to claim 7, **characterised in that** succinic anhydride is used as the acid anhydride.

10. The method according to claim 7, **characterised in that** the ionic liquid is selected from the group comprising: 1-hexyl-3-methylimidazolium hydrogen sulphate ([C6mim]HSO₄), 1-octyl-3-methylimidazolium hydrogen sulphate ([C8mim]HSO₄), and 1-decyl-3-methylimidazolium hydrogen sulphate ([C10mim]HSO₄).

11. The method according to claim 7, **characterised in that** the ionic liquid is added in an amount of from 1.0 wt.% to 2.5 wt.% relative to the mass of the mixture comprising the epoxy resin and the acid anhydride.
